(19) Europäisches Patentamt
European Patent Office
Office européen des brevets

(11) Publication number: **0 409 416 A2**

# (12) EUROPEAN PATENT APPLICATION

(21) Application number: **90306813.8**

(22) Date of filing: **21.06.90**

(51) Int. Cl.$^5$: **B01D 67/00**, B01D 69/04, B01D 71/52, B01D 71/54, B01D 71/56, C08J 9/26

(30) Priority: **19.07.89 GB 8916440**

(43) Date of publication of application: **23.01.91 Bulletin 91/04**

(84) Designated Contracting States: **AT BE CH DE DK ES FR GB GR IT LI LU NL SE**

(71) Applicant: **IMPERIAL CHEMICAL INDUSTRIES PLC**
**Imperial Chemical House, 9 Millbank**
**London SW1P 3JF(GB)**

(72) Inventor: **Birch, Robin David**
**19 Paul's Rise**
**Woodchester, Stroud, Gloucestershire(GB)**
Inventor: **Artus, Kevin James**
**10 Snowdrop Close**
**Abbeymead, Gloucester GL4 7DZ(GB)**

(74) Representative: **Hulse, Raymond et al**
**Imperial Chemical Industries PLC Legal Department: Patents PO Box 6 Bessemer Road**
**Welwyn Garden City Hertfordshire AL7 1HD(GB)**

## (54) Tubular membrane.

(57) A method of producing a membrane having substantially uniform porosity in which a blend of a first polymer and a second, immiscible, polymer is extruded to form a structure of the desired cross section in which the polymers are present as interpenetrating networks and leaching out the second polymer so producing a structure comprising the first polymer network characterised in that the second polymer has a lower melt viscosity than, or the same melt viscosity as, the first polymer.

EP 0 409 416 A2

# TUBULAR MEMBRANE

This invention relates to a membrane and more particularly to a membrane having a high porosity surface. The membrane may be tubular or it may have a rectangular or other cross section.

European Patent Application No 88301982 (Imperial Chemical Industries PLC) is concerned with a method of producing a low density, porous, film or tape by melt spinning a blend of a thermoplastic polymer and another thermoplastic polymer into a film or tape and then leaching away the other polymer using a suitable solvent. The film produced, being highly porous, may be used for a variety of end uses including a filtration or separation medium.

United States Patent Serial No 4,755,540 (Raychem Limited) describes a method of making a polyaryletherketone porous membrane, comprising the steps of:

(a) providing a mixture of a first polymeric material, which is a polyaryletherketone, and a second polymeric material, which is partially incompatible with said first polymeric material;

(b) forming said mixture into a film; and

(c) extracting from said film at least a substantial portion of said second polymeric material by means of a liquid which does not dissolve said first polymeric material.

European Patent Application 246752 (Imperial Chemical Industries PLC) describes a melt spun tube having two polymeric fibrous components and containing from 30 to 70 parts by weight of a first component and from 70 to 30 parts by weight of a second component, each component being present in the tube wall as fibrils which are substantially aligned to the axis of the tube, the aligned fibrils being interconnected to each other in a random manner, the interconnections penetrating through the fibrils of the other component such that both components exist in the tube wall as interpenetrating networks. A feature of the tube is that one of the two interpenetrating networks forming the tube wall can be leached out of the tube wall by a suitable solvent so producing a highly porous tube having a wall comprising the other polymer network. Such a porous tube can be used to advantage in the construction of a membrane.

An important aspect of the manufacture of any membrane is the ability to provide the membrane with a surface with well defined pores. In addition, the membrane surface must obviously be capable of allowing movement of a particular species through the membrane. This flux rate is critical to the performance of the membrane. For a given pore size and driving pressure, membranes with high flux rates are preferred to those with low flux rates.

In the production of membranes by the method described in European Patent Application 246752 we have now found that it is necessary for the polymer which is required to be leached out of the wall to have a lower or the same melt viscosity as the other polymer otherwise a low porosity surface is formed on the membrane.

According to the invention, therefore, we provide a method of producing a membrane having substantially uniform porosity in which a blend of a first thermoplastic polymer and a second, immiscible, thermoplastic polymer is extruded to form a structure having the desired cross section in which the polymers are present in the wall of the structure as interpenetrating networks and leaching out with a solvent for the immiscible polymer that network formed by the immiscible polymer so producing a porous structure having a wall comprising the first polymer network characterised in that the said immiscible polymer has a lower melt viscosity than, or the same melt viscosity as, the first polymer.

Using the method of the invention we can achieve a desirable porosity in the surface of the membrane if the two polymers have the viscosity relationship specified above. This selection of viscosity relationship allows a preferential enrichment of the membrane surface by the second, immiscible, polymer and this, in turn, after leaching ensures that the surface is highly porous.

We believe that this enrichment of the membrane surface by the immiscible polymer ie. that polymer which is to be leached out is due to a tendency for the lower viscosity component to move to regions of high shear ie. the extruder die walls.

Normally, if a blend of two polymers with differing melt viscosities is introduced into a shear field, the polymer with the lower viscosity will move to regions of highest shear. This effect is well known. What is unexpected is the fact that this can be achieved in an extrusion system which continually and most efficiently mixes the blend up to the point of extrusion.

Indeed we have investigated samples of the blend collected from the sand pack filter ie. immediately prior to extrusion and found them to have an excellent blend dispersion. Further, if the blend was allowed to segregate into the individual phases then surface enrichment by one of the phases might be achievable but the interpenetrating networks, which relies on intimate mixing of the blend, would be completely lost. What, therefore, is unexpected is that we have been able to produce both surface enrichment and the formation of

interpenetrating networks simultaneously.

As examples of polymers of which the membrane may be made are inter alia polymers and copolymers of the general formulae I-VII.

PEEK 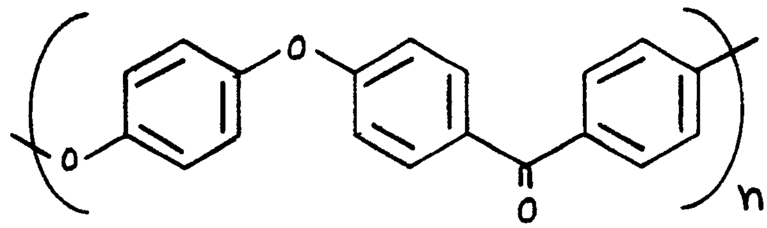 I

PEK 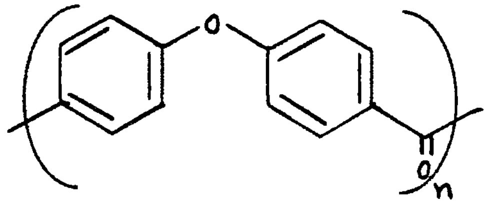 II

PEKK 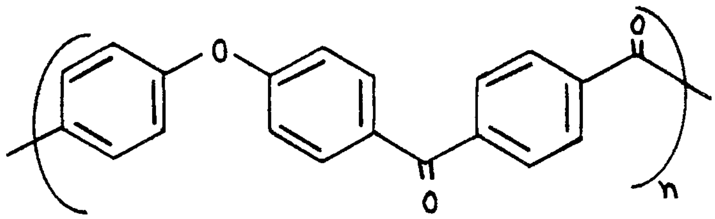 III

PEEKEK IV

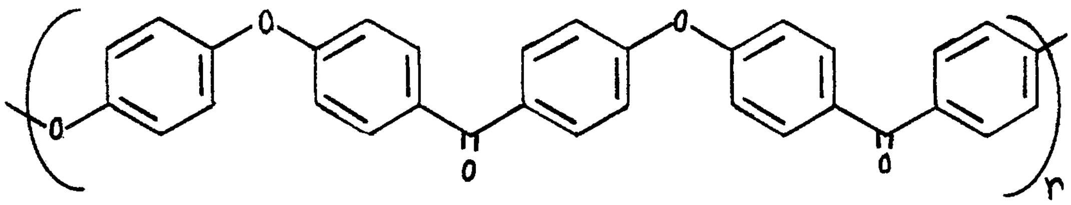

PEDEK 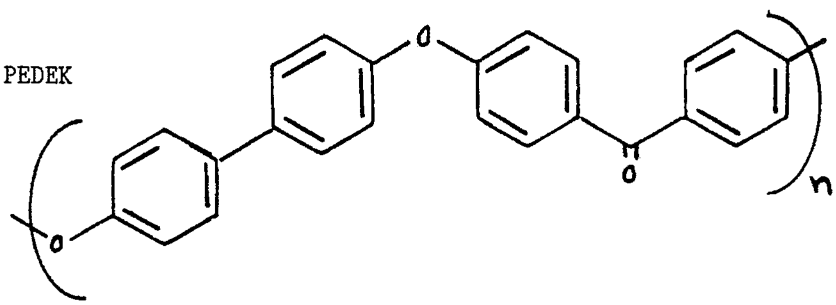 V

Whereas the polymer is preferably a homopolymer, e.g. PEEK or PEK, we do not exclude the possibility that it may be a copolymer e.g. PEEK/PEK, PEEK/PES, PEK/PES, PEEK/PEES, wherein the copolymer units are represented by the following formulae:

PES 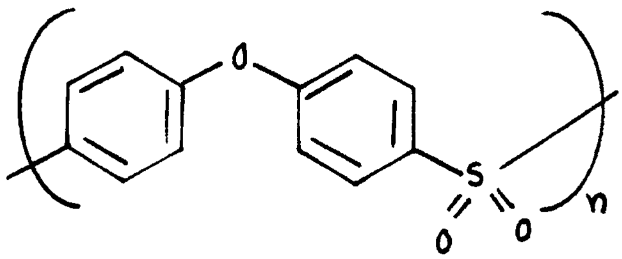 VI

PEES VII

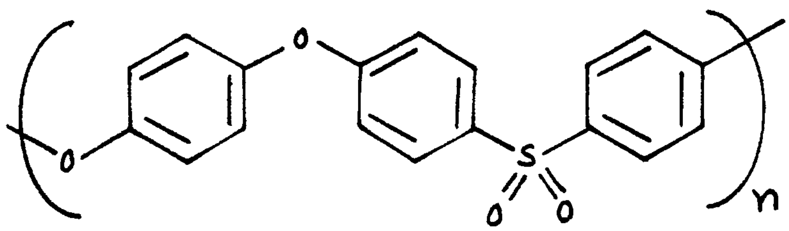

Each such polymer-type is hereinafter referred to for convenience by the trivial name hereinbefore appended thereto.

Alternatively the membrane may be made of polypropylene (using, for example, a nylon as the immiscible polymer) or nylon (using, for example, polypropylene as the immiscible polymer) or a polymer based on a thioketone or a polyurethane (using, for example, polypropylene as the immiscible polymer).

It will, of course, be realised that by ensuring that the polymer components have suitable melt viscosities, either of the two components can provide surface enrichment of the extruded tube.

By the term "melt viscosity" which is used herein in relation to the first polymer and the second, immiscible, polymer we mean the melt viscosity of the polymer at the temperature of extrusion and during those shear conditions to which the polymer is subjected during extrusion.

In the following examples, Nos 1 to 6, which are concerned with tubular membranes, a small screw extruder having a 22mm diameter screw and length to diameter ratio of 22 to 1 was used in conjunction with a standard sand pack and annular die. The die had an annular ring through which the blend was extruded. The annular ring had an inner dimension of 2.2mm and an annular gap of 0.18mm. The melt viscosities referred to are the melt viscosities of the polymers at 380 °C and 2,500 reciprocal seconds shear, which is approximately the shear to which the polymer blend is subjected during extrusion. Examples 1 and 4 are outside the scope of the invent ion and are included merely for comparative purposes.

EXAMPLE 1

A blend was formed from 50% by weight of polyetheretherketone (PEEK) grade 150G having a melt viscosity of 950 poise and 50% by weight of polyethersulphone (PES) grade 4100G having a melt viscosity of 1340 poise. Both of these polymers are available from ICI Advanced Materials.

Prior to blending, each of the polymers was dried under vacuum for a minimum of 12 hours at 110 degrees C. The dried polymers were mixed and added to the feed hopper of the extruder.

The blend of PEEK and PES was extruded through the annular die at a rate of 11 grams/minute and at a temperature of 360-380 degrees C. A nitrogen gas feed was applied to the inside of the annular die at a rate commensurate with producing tubes with good wall concentricity and dimensional uniformity. Tubes

were extruded with typical outside diameters of 2.5mm and wall thickness of 250 micrometres. The tubes were quenched using a conventional air quench.

Short lengths of tube were immersed in an excess of boiling dimethylformamide for two hours and then dried under vacuum at 95 degrees C for eight hours.

The sample tubes had lost 94% of the PES component and now consisted of stout, non-fibrous, porous PEEK tubes. The body of the wall of the tube consisted of a random, highly 10 interconnected PEEK phase which was highly porous. However the inner and outer surfaces of the wall of the tube were in the form of a continuous, non-porous, PEEK skin of approximately 1 micrometer thickness (see Fig 1 in which the non-porous PEEK skin on the surface of the fibre is clearly shown on the upper left part of the figure).

EXAMPLE 2

A blend was formed between 50% by weight of polyetheretherketone (PEEK) grade 450G having a melt viscosity of 1940 poise and 50% by weight of polyethersulphone (PES) grade 4100G having a melt viscosity of 1340 poise. Both polymers, which were supplied by ICI Advanced Materials, had been previously dried under vacuum for a minimum of 12 hours at 110 degrees C prior to being fed to the feed hopper of the extruder. The blend of PEEK and PES was extruded through a similar annular die as was used in Example 1 at a rate of 11 grams/minute and at a temperature of 360-380 degrees C.

A nitrogen gas feed was applied to the inside of the annular die at a rate commensurate with producing tubes with good wall concentricity and dimensional uniformity. The tubes were quenched using a conventional air quench.

Samples of tube were immersed in an excess of boiling dimethylformamide for two hours and then dried under vacuum at 95 degrees C for eight hours. The sample tubes had lost 98% of the PES phase and now consisted of stout, non-fibrous, porous PEEK tubes. The wall of each tube had a random, highly interconnected, PEEK structure. The inner and outer surfaces of the tube contained pores (see Fig 2 which shows that the PEEK skin on the surface of the fibre is porous).

EXAMPLE 3

A blend was formed from 50% by weight of polyetheretherketone (PEEK) grade 450G having a melt viscosity of 1940 poise and 50% by weight of polyetherethersulphone (PES) grade 3600G having a melt viscosity of 1230 poise. Both polymers, which were supplied by ICI Advanced Materials, had been previously dried under vacuum for a minimum of 12 hours at 110 degrees C prior to being fed to the feed hopper of the extruder.

The blend of PEEK and PES was extruded through a similar annular die as was used in Example 1 at a rate of 11 grams/minute and at a temperature of 360-380 degrees C. A nitrogen gas feed was applied to the inside of the annular die at a rate commensurate with producing tubes with good wall concentricity and dimensional uniformity. The tubes were quenched using a conventional air quench.

Samples of tube were immersed in an excess of boiling dimethylformamide for two hours and then dried under vacuum at 95 degrees C for 8 hours. The samples were found to have lost 99.5% of the PES phase and now comprised stout, non-fibrous, porous PEEK tubes. The wall of the tubes had a random, highly interconnected, structure. The inner and outer surfaces of the tube wall had a very high degree of porosity (see Fig 3 which shows that the surface of the PEEK fibre is highly porous).

EXAMPLE 4

Samples of the tube made in accordance with Example 1 were tested in order to ascertain whether they would be suitable for use as a membrane.

The tubes were sealed off at one end using either a high melting point wax or epoxy resin supplied by Ciba Geigy. The open end of a sealed tube was attached to a variable pressure gas supply so enabling a positive gas pressure to be applied to the leumen of the tube.

The whole tube was immersed in de-ionised water. Because of the hydrophobic nature of PEEK, each sample tube was pre-wetted by immersion in a 35% isopropyl alcohol/water mixture.

The gas pressure was slowly increased and the gas flow rate monitored. No gas flow was observed up to the point of rupture of the wall of the tube. Tubes made in accordance with Example 1 were, therefore,

not suitable for use as membranes.

EXAMPLE 5

Samples of the tube made in accordance with Example 2 were tested in order to ascertain whether they were suitable for use as a membrane.

The tubes were sealed at one end as in Example 4. The open end of a tube was attached to a variable pressure nitrogen gas supply as in Example 4. The whole tube, which had been pre-wetted as in Example 4, was immersed in de-ionised water and the gas pressure was slowly increased. The specific permeability of the tube was found to be $55.4 \times 10^{-17} m^2$.

To characterise the pore size, latex microspheres (supplied by Polyscience, Northampton) with known diameters were diluted to a concentration of 0.025% using de-ionised water to form standard stock solutions. The stock solutions were passed, under pressure, through samples of the pre-wetted tube. The concentration of each of the feed solutions was compared with that of the corresponding permeate. It was found that the tubular membrane rejected 99.8% of the 0.3 micrometre diameter microspheres and 95.7% of the 0.05 micrometre diameter microspheres.

EXAMPLE 6

Samples of tube from Example 3 were tested to see if they were suitable for use as a membrane. The tubes were sealed off at one end and pre-wetted as in Example 4.

The open end of a tube was attached to a variable gas supply and the whole tube immersed in de-ionised water and the supply pressure slowly increased. The specific permeability was found to be $200 \times 10^{-17} m^2$.

To characterise the pore size, latex microspheres were used as in Example 5. Samples of the tube from Example 3 were sealed and pre-wetted as before and the stock solutions were passed through them. The concentration of each of the feed solutions was compared to that of the corresponding permeate. It was found that the membrane rejected 99.2% of the 0.3 micrometre diameter microspheres and 95.4% of the 0.05 micrometre diameter microspheres.

In order to compare the pore sizes of the tubular membranes produced in Examples 2 and 3 and tested in Examples 5 and 6 we investigated the performance of a well known hollow polypropylene tubular membrane made by Accurell (supplied by AKZO) and found it had a permeability of $130 \times 10^{-17} m^2$ and that it rejected 99.4% of the 0.3 micrometre diameter latex microspheres and 89.3% of the 0.05 micrometre diameter latex microspheres.

In the following examples, Nos 7 and 8, which are concerned with tubular membranes, a small screw extruder having a 22 mm diameter screw and length to diameter ratio of 22 to 1 was used in conjunction with a standard sand pack and die. The die had an annular ring through which the blend was extruded. The annular ring had an inner dimension of 2.2 mm and an annular gap of 0.18 mm. In Example 7, the melt viscosities referred to are the melt viscosities of the polymers at 180° C and 5,000 reciprocal seconds shear, which is approximately the shear to which the polymer blend is subjected during extrusion. In Example 8, the melt viscosities referred to are the melt viscosities of the polymers at 200° C and 5,000 reciprocal seconds shear, which is approximately the shear to which the polymer blend is subjected during extrusion.

EXAMPLE 7

A blend was formed from 65% by weight of a polyurethane (PU) grade Estane 58300 supplied by B F Goodrich having a melt viscosity of 1430 poise and 35% by weight of polypropylene (PP) grade PXC 31631 supplied by ICI Chemicals and Polymers Limited having a melt viscosity of 310 poise.

Prior to blending, each of the polymers was dried under vacuum for a minimum of 4 hours at 80 degrees C. The dried polymers were mixed and added to the feed hopper of the extruder.

The blend of PU and PP was extruded through the die at a rate of 9 grams/minute and at a temperature of 180 degrees C. A nitrogen gas feed was applied to the inside of the annular die at a rate commensurate with producing tubes with good wall concentricity and dimensional uniformity. The tubes were quenched using a conventional air quench.

Short lengths of tube were immersed in an excess of boiling petroleum ether (100-120 degrees C) for four hours and then dried under vacuum at 60 degrees C for four hours.

The sample tubes had lost 90% of the PP component and now consisted of elastic, non-fibrous, porous PU tubes. The body of the wall of the tube consisted of a random, highly interconnected PU phase which was highly porous. The inner and outer surfaces of the wall of the tube had a very high degree of porosity.

EXAMPLE 8

A blend was formed from 65% by weight of a polyurethane (PU) grade Estane 58300 supplied by B F Goodrich having a melt viscosity of 820 poise and 35% by weight of polypropylene (PP) grade GSE 16 supplied by ICI Chemicals and Polymers Limited having a melt viscosity of 520 poise. The polymers were dried and mixed as in Example 7.

Tubes were produced as in Example 7 except that the extrusion temperature was 200 °C.

75% of the PP was removed from the tube wall in the manner described in Example 7.

The body of the wall of the tube consisted of a random, highly interconnected PU phase which was porous. The inner and outer surfaces of the wall of the tube had a lower degree of porosity than that of the tube prepared in Example 7 because the melt viscosities of the polymers in the blend are much more similar then in the blend used in Example 7.

In the following examples, Nos 9 and 10, tubular membranes are produced using the equipment described with reference to Examples 7 and 8. In both examples, the melt viscosities referred to are the melt viscosities of the polymers at 290 °C and 5,000 reciprocal seconds shear, which is approximately the shear to which the polymer blend is subjected during extrusion. Example 9 is outside the scope of the invention and is included for comparative purposes only.

EXAMPLE 9

A blend was formed from 53% by weight of nylon 66 (PA66) grade Nylon SG supplied by ICI Chemicals and Polymers Limited having a melt viscosity of 400 poise and 43% by weight of polypropylene (PP) grade PXC 31626 supplied by ICI Chemicals and Polymers Limited having a projected melt viscosity of 200 poise and 4% by weight of nylon 11 grade Rilsan supplied by Atochem Limited. Nylon 11 was included in the blend as a compatibiliser to stabilise the spinning conditions and at this low level would not be expected to substantially effect the melt viscosities of the principal components of the blend.

Prior to blending, the PA 66 was dried to an equilibrium moisture level. The other two components were dried under vacuum at 60 °C for six hours.

The blend was extruded through the die at 8 grams/minute and at a temperature of 290 °C. Otherwise the same processing conditions as used in Examples 7 and 8 were used in these examples.

Short lengths of tube were immersed in an excess of formic acid (90% strength) at room temperature for 60 hours.

The sample tubes were rinsed in formic acid and then dried under vacuum for 4 hours at 60 °C. The tubes had lost 98% of the PA66 component and now consisted of stout, non-fibrous, PP tubes. The body of the wall of the tube consisted of a random highly interconnected PP phase which was highly porous. However the inner and outer surfaces of the tube wall had exceedingly low porosity (see Fig 4).

EXAMPLE 10

Example 9 was repeated. However in this example the PP was removed from the tube wall by immersing the tube in boiling para xylene for 6 hours. The tube was then dried under vacuum for 16 hours at 80 °C. The tube had lost 93% of the PP component and was stout and non-fibrous.

The body of the wall of the tube consisted of a random highly interconnected PA66 phase which was highly porous and having a highly porous inner and outer surface (see Fig 5).

With regard to the above Examples, it should be realised that a die having different dimensions and shapes, including rectangular, could have been used. More particularly, much smaller or larger diameter tubes, ie. capillaries, hollow fibres or large bore tubes, could be produced. Furthermore, the dried polymers could have been pre-blended by some other technique for example using a Brabender mixer or with the aid of two extruders, each carrying one of the polymers, the outputs from each screw being mixed subsequently.

## Claims

1. A method of producing a membrane having substantially uniform porosity in which a blend of a first thermoplastic polymer and a second, immiscible, thermoplastic polymer is extruded to form a structure having the desired cross section in which the polymers are present in the wall of the structure as interpenetrating networks and leaching out with a solvent for the immiscible polymer that network formed by the immiscible polymer so producing a porous structure having a wall comprising the first polymer network characterised in that the said immiscible polymer has a lower melt viscosity than, or the same melt viscosity as, the first polymer.

2. A method as claimed in Claim 1 in which the first polymer is either PEEK or PEK.

3. A method as claimed in either Claim 1 or Claim 2 in which the first polymer is PEEK and the second, immiscible, polymer is PES.

4. A method as claimed in Claim 1 in which the first polymer is a polyurethane and the second, immiscible, polymer is polypropylene.

5. A method as claimed in Claim 1 in which the first polymer is nylon 66 and the second, immiscible, polymer is polypropylene.

6. A membrane in the form of a tube made in accordance with a method as claimed in any one of preceding Claims 1 to 5.

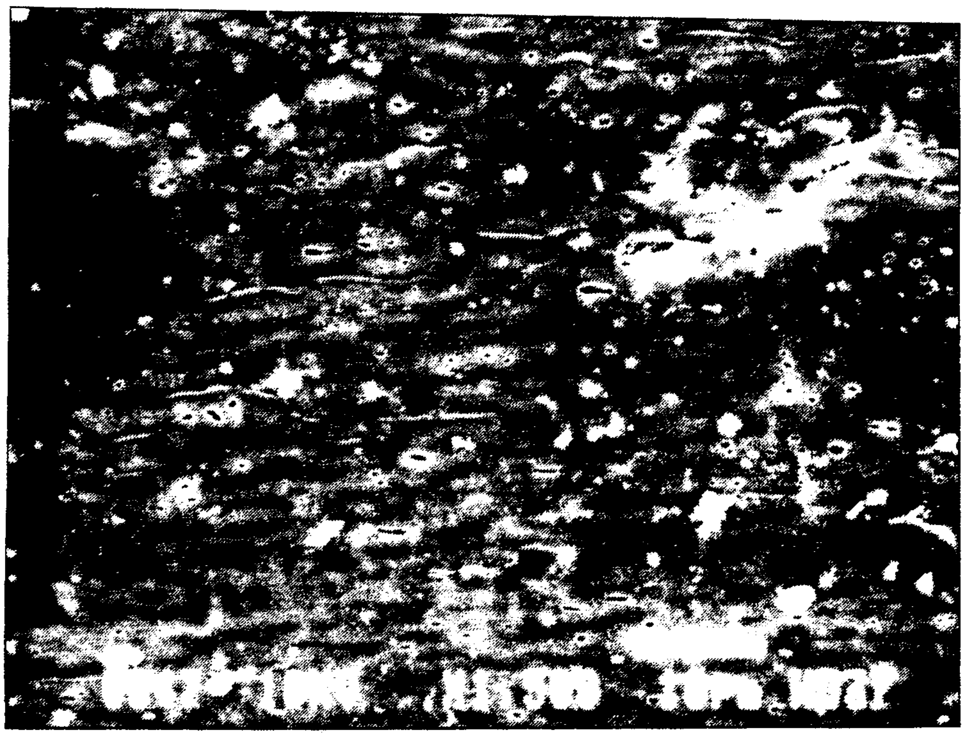

FIG. 2

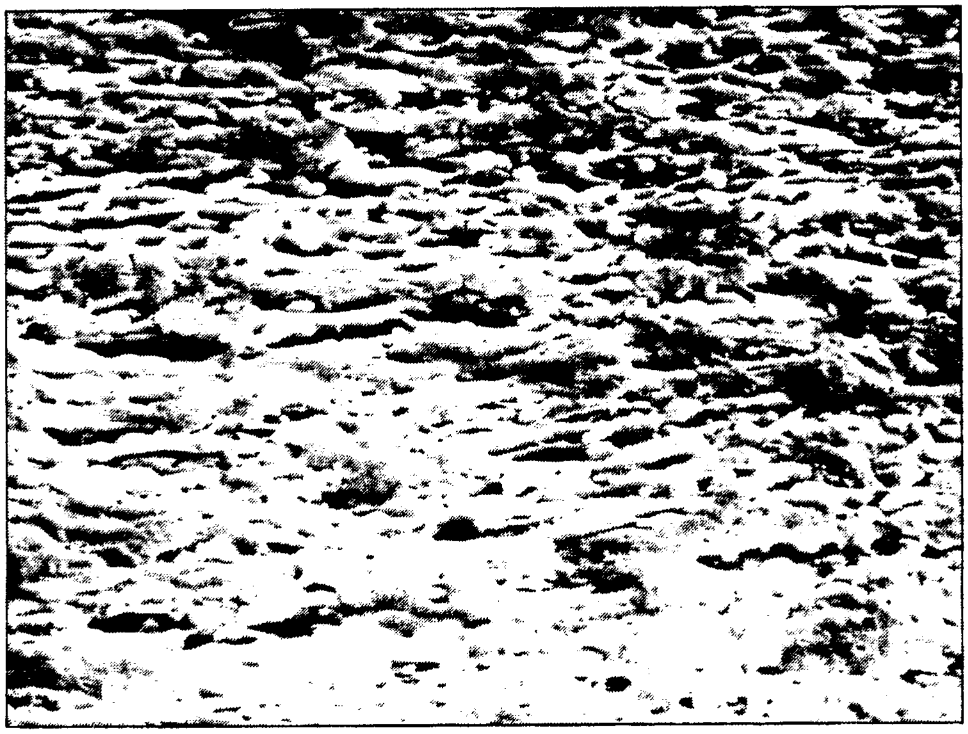

FIG. 3

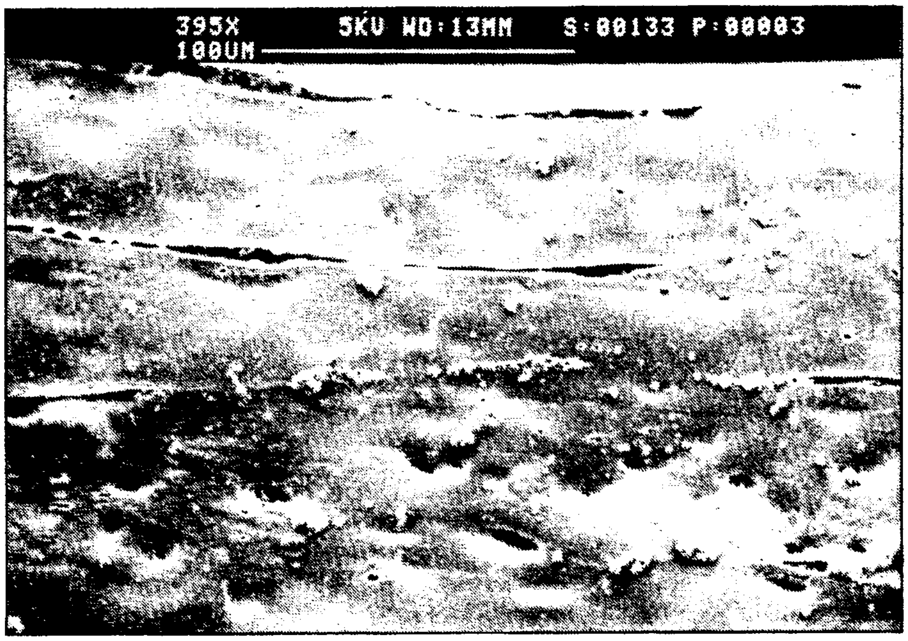
395X 5KV WD:13MM S:00133 P:00003
100UM

FIG. 4

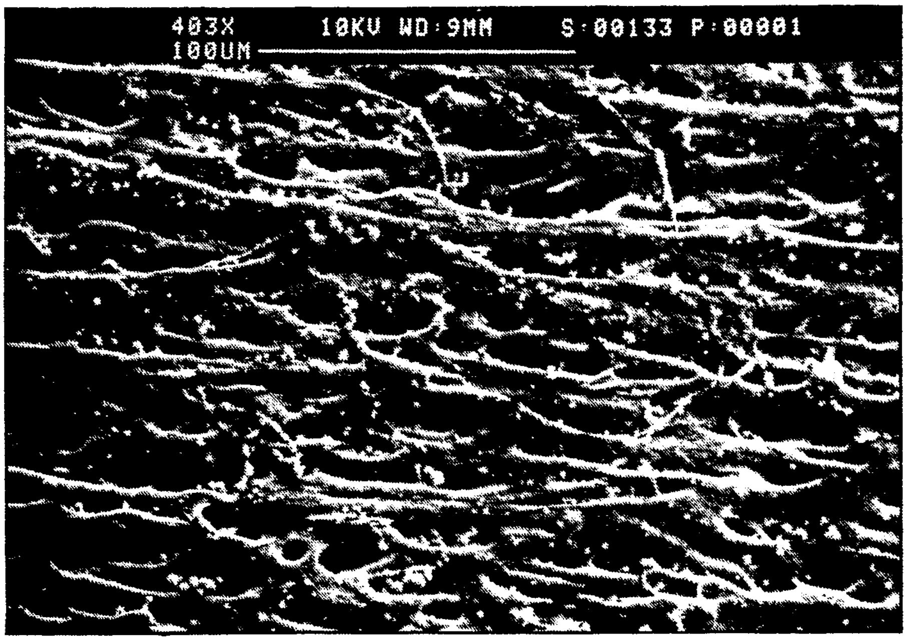
403X 10KV WD:9MM S:00133 P:00001
100UM

FIG. 5